# EUROPEAN PATENT SPECIFICATION

(11) **EP 3 477 618 B1**
(45) Date of publication and mention of the grant of the patent: **23.09.2020**
(21) Application number: 18203009.8
(22) Date of filing: 28.10.2018
(51) Int. Cl.: G08G 5/00

(54) **VIRTUAL PRIVATE DRONE SYSTEM**
VIRTUELLES PRIVATES DROHNENSYSTEM
SYSTÈME DRONE PRIVÉ VIRTUEL

(30) Priority: 31.10.2017 US 201762579746 P
(43) Date of publication of application: 01.05.2019
(73) Proprietor: Lai, Cheng-Jia, Sunnyvale, CA 91748 (US)
(72) Inventor: Lai, Cheng-Jia, Sunnyvale, CA 91748 (US)
(74) Representative: Lang, Christian

(56) References cited:
- US-A1- 2017 045 884
- US-A1- 2017 270 805
- YANMAZ EVSEN ET AL: "Drone networks: Communications, coordination, and sensing", AD HOC NETWORKS, vol. 68, 23 September 2017 (2017-09-23), pages 1-15, XP085275171, ISSN: 1570-8705, DOI: 10.1016/J.ADHOC.2017.09.001
- PARK HYORIN ET AL: "Persistent UAV security presence service: Architecture and prototype implementation", 2017 INTERNATIONAL CONFERENCE ON UNMANNED AIRCRAFT SYSTEMS (ICUAS), IEEE, 13 June 2017 (2017-06-13), pages 1800-1807, XP033131830, DOI: 10.1109/ICUAS.2017.7991422 [retrieved on 2017-07-25]
- YAPP JUSTIN ET AL: "UAV as a Service: A Network Simulation Environment to Identify Performance and Security Issues for Commercial UAVs in a Coordinated, Cooperative Environment", 18 October 2016 (2016-10-18), INTERNATIONAL CONFERENCE ON SIMULATION, MODELING, AND PROGRAMMING FOR AUTONOMOUS ROBOTS,SIMPAR 2010; [LECTURE NOTES IN COMPUTER SCIENCE; LECT.NOTES COMPUTER], SPRINGER, BERLIN, HEIDELBERG, PAGE(S) 347 - 355, XP047359839, ISBN: 978-3-642-17318-9 [retrieved on 2016-10-18] * abstract * * Sections "2. SYSTEM DESCRIPTION" and "3.PROTOTYPES OF KEY COMPONENTS AND SMALL SCALE IMPLEMENTATION" *

## Description

### FIELD OF THE INVENTION

The present invention relates to unmanned vehicles capable of flight. Such vehicles are commonly referred to as unmanned aerial vehicles ("UAVs"), or less formally as "drones". More specifically, the present invention relates to a system for virtual private drones.

### BACKGROUND OF THE INVENTION

An Unmanned Aircraft System (UAS), a.k.a. drone, is a system of hardware and software that is built capable of moving by air to perform tasks such as shooting photos and videos, taking measures with onboard sensors, taking physical actions with robotic arms, etc., for emerging applications in both commercial and personal uses. Drones may also refer to other unmanned systems that can move and perform tasks on the surface of land or water, underground, or in water.

Recently, drone deployments have been rapidly growing in a wide range of applications including both commercial and personal uses. For example, drones are commercially used in construction, mining, agriculture, emergency response, property inspection, cinematics, etc. while personally used a lot for entertainment, recreational photography, and video recording. Experimental uses of drones have also been extended to cargo delivery, passenger transportation, public space assistance, child care, senior care, warehouse control, surveillance, and many other new applications.

However, security issues have become a serious concern when drones are used in a public space, in or near a controlled or private space. For example, a malfunctioning or poorly designed drone could cause damage or disrupt other operations in the area, and a deliberately misbehaving drone could become nuisance to the public, resulting in privacy issues, or even a threat. Regulations and local policies are being made and enforced to make sure public safety and avoid nuisance from drone usages, despite the benefits and promising technical advantages. Thus, the drone activities must be compliant to the regulations and local policies for security reasons. No public or controlled space would allow arbitrary or unlimited drone activities by anyone.

In order to more appropriately facilitate an individual user making use of a drone service on demand as a consumer in the market, the business owner (as a general term to include all those authorities that govern the drone activities and deploy the drone services on a particular site and space) must ensure that if an individual user is provided with a drone service on demand, the drone activity should be limited to what the business owner allows by careful pre-configuration.

On the economic side, a drone system of hardware and software is becoming more diverse and specialized, and more expensive to deploy commercially. The total cost of ownership (TCO) of a large-scale commercial drone deployment may be too high, and thus unaffordable to businesses. Therefore, good modularity of the hardware and software parts to build a drone system can be critical for the success of widespread commercial drone service deployment, as it can greatly reduce the overall costs of the system installation, operation, upgrade, and maintenance. This modularity should allow interoperability for system integration with interfaces, so that an on-demand user task can be done by the configuration from the business owner in each particular commercial drone deployment.

In the publication "Drone networks: Communications, coordination, and sensing", Ad Hoc Networks, vol. 68, 23 September 2017, pages 1 to 15, a drone network for, e.g., a search and rescue mission, is described. A plurality of drones cooperate with each other to complete a task such as surveillance of a certain area. For that purpose the drones communicate with each other and with a ground station. In order to ensure that the drones keep distance from forbidden regions of the surveillance area the drones can receive corresponding instructions, either by providing a fixed route or by using a positioning system such as the GPS.

### SUMMARY OF THE INVENTION

This invention is related to a Virtual Private Drone (VPD) system having the features of claim 1. Further embodiments are subject-matter of the dependent claims. The Virtual Private Drone system according to the invention includes at least four roles of parties in a drone service deployment: (1) business owner, (2) consumer user, (3) drone, and (4) computing engine, where they interface with each other to form a virtualized drone service for the consumer user to execute a private drone task on demand, in a space that is configured and governed by the business owner with the drone hardware and software to be summoned, and integrated to allow real-time data and signal processing by a nearby computing engine in the local area network.

In one aspect, a virtual private drone (VPD) system may include a device manager, one or more stations, one or more drones, and one more computing engines. The device manager is configured to keep the repository of all device metadata in each deployment of the drone, and runs as an always-on point of contact on the network, globally reachable by all other devices in the system. It is noted that this can be implemented as a virtual machine running in the public cloud or in a private cloud, with a globally reachable address of Internet Protocol (IP) and well-known port.

Each device in the VPD system, when powered on, should initiate first by registering itself with the device manager in the cloud-based repository, to authenticate itself or disclose its own identity, type, network locality, capacities, state, etc., as well as retrieving the information for other devices currently operating in the same VPD system so that it can later make local communication with those devices. The device registration should include a network address or identification in the local area network it is currently or expected to be attached to, so that another device of the same VPD system is able to do data communication or make Remote Procedure Call (RPC) to it. It is noted that the device manager should use soft-state with a timeout to maintain the device registration since a device may get powered off or lose global network connectivity intentionally or accidentally without notifying the device manager in the cloud.

Once a device is registered, the device should only use local peer-to-peer (P2P) data communication with other devices in the local area network such as WiFi, Bluetooth, Zigbee, etc. depending on the specific cases of deployment by the business owner. Using local data communication is a design factor that is made to ensure short latency to allow real-time applications of the drone service with quick user interaction in the deployment space. It also minimizes the costs of data communication that can require high bandwidth when images and videos are transmitted between the drone and the computing engine during the operation. Additionally, it minimizes the power consumption of the device for the data communication, which is critical for many devices that run on battery power.

### BRIEF DESCRIPTION OF THE DRAWINGS

FIG. 1 is a schematic view of the system of virtual private drone in the present invention.
FIG. 2 is a schematic view of the user task template for VPD installation in the present invention.

### DETAILED DESCRIPTION OF THE INVENTION

The detailed description set forth below relates to an exemplary embodiment of the invention.

Unless defined otherwise, all technical and scientific terms used herein have the same meaning as commonly understood to one of ordinary skill in the art to which this invention belongs. Although any methods, devices and materials similar or equivalent to those described can be used in the practice or testing of the invention, the exemplary methods, devices and materials are now described.

All publications mentioned are incorporated by reference for the purpose of describing and disclosing, for example, the designs and methodologies that are described in the publications that might be used in connection with the presently described invention. The publications listed or discussed above, below and throughout the text are provided solely for their disclosure prior to the filing date of the present application. Nothing herein is to be construed as an admission that the inventors are not entitled to antedate such disclosure by virtue of prior invention.

As used in the description herein and throughout the claims that follow, the meaning of "a", "an", and "the" includes reference to the plural unless the context clearly dictates otherwise. Also, as used in the description herein and throughout the claims that follow, the terms "comprise or comprising", "include or including", "have or having", "contain or containing" and the like are to be understood to be open-ended, i.e., to mean including but not limited to. As used in the description herein and throughout the claims that follow, the meaning of "in" includes "in" and "on" unless the context clearly dictates otherwise.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the embodiments. As used herein, the term "and/or" includes any and all combinations of one or more of the associated listed items.

This invention is related to a Virtual Private Drone (VPD) system, which may include at least four roles of parties in a drone service deployment: (1) business owner, (2) consumer user, (3) drone, and (4) computing engine, where they interface with each other to form a virtualized drone service for the consumer user to execute a private drone task on demand, in a space that is configured and governed by the business owner with the drone hardware and software to be summoned, and integrated to allow real-time data and signal processing by a nearby computing engine in the local area network.

The business owner is a general term to include all those authorities that govern the property space and offer the drone service for the consumer users who visit the space. One of the top priorities for the business owner should be to ensure the security when each drone is being used by a consumer user, compliant with the regulations and local policies as agreed. Thus, the business owner configures the drone flight plan and action options available to each user when the drone is summoned to the user to start the private task, and authorizes the user to give some commands to the drone to perform the task as agreed in the business contract of this drone service. The runtime user commands sent to the drone for a certain task may include some input parameters of the user-specific requirements and/or state, which should result in expected behaviors that must be carefully considered in the business owner's pre-configuration of the drone service.

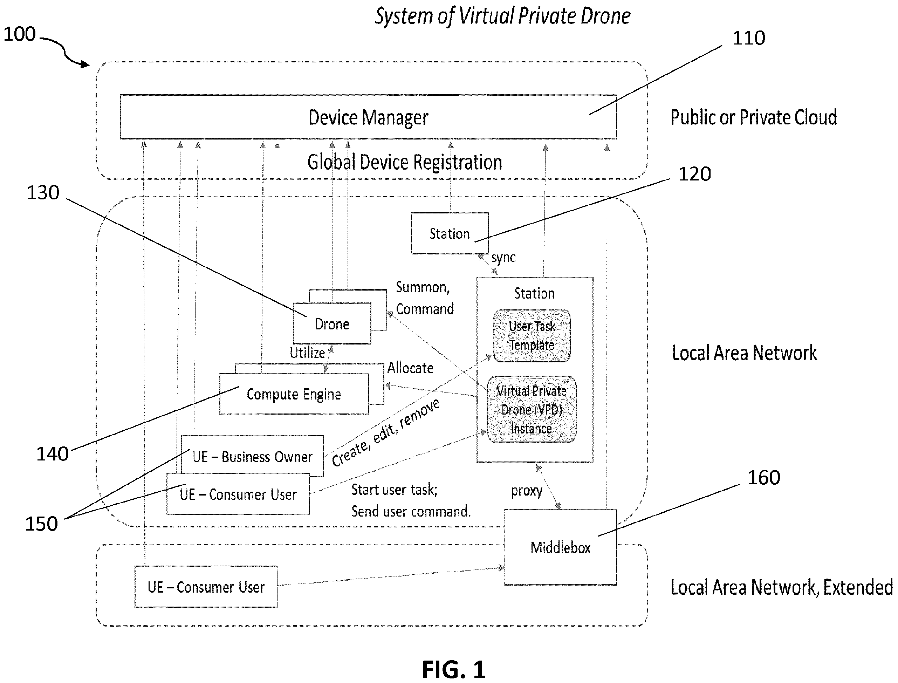

In one aspect, as shown in FIG. 1, a virtual private drone (VPD) system 100 may include a device manager 110, one or more stations 120, one or more drones 130, and one more computing engines 140. The device manager 110 is configured to keep the repository of all device metadata in each deployment of the drone 130, and runs as an always-on point of contact on the network, globally reachable by all other devices in the system. It is noted that this can be implemented as a virtual machine running in a public cloud or in a private cloud, with a globally reachable address of Internet Protocol (IP) and well-known port.

Each device in the VPD system 100, when powered on, should initiate first by registering itself with the device manager 110 in the cloud-based repository, to authenticate itself or disclose its own identity, type, network locality, capacities, state, etc., as well as retrieving the information for other devices currently operating in the same VPD system so that it can later make local communication with those devices. The device registration should include a network address or identification in the local area network it is currently or expected to be attached to, so that another device of the same VPD system is able to do data communication or make Remote Procedure Call (RPC) to it. It is noted that the device manager 110 should use soft-state with a timeout to maintain the device registration since a device may get powered off or lose global network connectivity intentionally or accidentally without notifying the device manager in the cloud.

Once a device is registered, the device should only use local peer-to-peer (P2P) data communication with other devices in the local area network such as WiFi, Bluetooth, Zigbee, etc. depending on the specific cases of deployment by the business owner. Using local data communication is a design factor that is made to ensure short latency to allow real-time applications of the drone service with quick user interaction in the deployment space. It also minimizes the costs of data communication that can require high bandwidth when images and videos are transmitted between the drone and the computing engine during the operation. Additionally, it minimizes the power consumption of the device for the data communication, which is critical for many devices that run on battery power.

The station 120 is a device that is the center of control for the VPD system 100. There may be multiple stations 120 in the same VPD system, as a cluster for high availability or fault tolerance, while each station 120 is able to function independently to handle a VPD service. All stations of the same VPD system should obtain the network address of each other during their registrations with the global device manager 110, and then start to synchronize their copies of device metadata using local communication. The device metadata may include the availability counts for the drones 130 and computing engines 140 in the same VPD system as described at below.

It is noted that the drone 130 can be provided by the drone provider that offers the drone hardware and software to be deployed by the business owner, and can be a drone vendor from whom the business owner directly purchases the drone, or a business-to-business drone service provider whom the business owner hires in terms. A drone typically includes a flight controller module which is programmable with a flight plan using a number of navigating points, and/or responding to runtime commands, to take off, land, move, etc. by a ground control station (GCS) via remote control (RC), or an onboard companioned computer that is directly wired to the flight controller, using a flight control RC protocol. This RC may also be performed via software development kit (SDK) that is released by the drone vendor for open system integration, and available to the system developers and partners who want to create a third-party GCS to be used with the drone. Each drone may be equipped with a specific set of sensors and/or robotic arms to achieve tasks in design, while the software control of those is typically done through onboard microcontroller and/or microprocessor input/output (I/O) with device-specific software mechanisms, either as part of the flight controller module or a separate module.

It is also worth noting that the software platform running on top of the microcontroller or microprocessor is usually generic enough to allow the same application software to work on different drone system platforms with minimal or no modification. This ability is assumed by the VPD system 100 described in this invention.

The drone provider may sometimes include a drone pilot if the drone itself does not operate autonomously. In this case, the drone pilot is a person who is certified to operate the drone in public or in this particular air space. As more and more successfully have self-flying drone systems been proven to operate, we assume the VPD system may require limited or even no efforts from a drone pilot. This is likely to be true as the regulations are being updated to allow commercial drone operations beyond visual sight-of-line from the pilot.

In one embodiment, the drone device 130 here is an abstract device that can be either the drone hardware itself. In another embodiment, the drone device 130 can be some proxy that has direct RC to the drone like a GCS, running third-party software based on the SDK from the drone vendor. After the drone device 130 is registered with the global device manager 110, it should obtain the address of at least one station in the (same) VPD system 100, and again register itself with all known stations 120. This local registration is necessary for authentication with security credentials in order to create a secure communication channel between the drone 130 and all of the stations 120. It also increments the count of available drones for certain user tasks depending on the drone capabilities specified in the metadata of this local registration process.

The computing engine 140 is generally the hardware and software that can perform specialized compute-intensive data processing such as computer vision and artificial intelligence (AI) using various algorithms. In one embodiment, the computing engine 140 for computer vision or AI will take input data and output the inference result by pattern-recognition algorithms such as Convolutional Neural Networks (CNN) and Support Vector Machines (SVM). Those AI engines are typically pre-trained using heuristic machine-learning algorithms based on selected data points, to fine tune the engine-internal parameters in regression to minimize the error rate of inference output to recognize patterns in the input data such as images and video streams. There are a significant number of AI algorithms to solve problems in computer vision and many others that may be applicable to a VPD service in this invention, useful to the consumer users of the VPD either directly or indirectly. Based on the AI engine hardware, software development can be made for specific algorithms. The business owner or authorized user should select an efficient and proper AI algorithm for the user tasks in the VPD service configuration in deployment.

It is noted that an AI engine includes the hardware part to run fast and typically parallel computation as well as the software part that can produce the inference output from the input signals at real times, to solve problems in computer vision, speech recognition, natural language processing, etc. While the hardware part is usually fixed in the configuration of the drone deployment in operation, the software part may be dynamically loaded on demand during each drone operation. How to dynamically load the AI software part is a separate topic with existing solutions typically offered by AI engine hardware vendors.

In one embodiment, the computing engine 140 is configured to make local registration with all known stations 120 after its global registration with the device manager 110 in the cloud. Similarly, it authenticates itself and increments the count of availability depending on its capabilities of engine hardware, while the stations 120 will decide which software to load onto the computing engine hardware on demand of a user task later. Since a computing engine hardware is typically able to concurrently execute multiple software tasks, for example, using multiple cores of its microprocessor unit in parallel, the availability count can be estimated. The estimates may use some algorithms for optimal resource allocation.

It is noted that if a drone device 130 or computing engine 140 finds no known station in the VPD system after its global registration, it simply stays in the VPD system 100 without local registration, waiting for a later contact from any station 120 that is newly powered on or just recovers from a crash or connectivity loss. A new station 120 should retrieve from the global device manager 110 the addresses of all globally-registered drone devices 130 and computing engines 140 in the same VPD system, and poll all those devices while it synchronizes with any other station if exists. If a local registration fails due to loss of connectivity, a drone device 130 or computing engine 140 also stays and waits for the station to recover and poll.

This mechanism is assumed in both global and local registration mechanisms, which implies that any registration is required to renew after a period of time, and will expire after a timeout unless renewed. An implementation may improve the efficiency if it adds explicit deregistration methods to the mechanism, but it is still necessary to base on this soft-state mechanism for the high likelihood of device failures or losses of connectivity which is not uncommon in practical deployment of drone services.

The VPD system 100 in the present invention may further include a user equipment (UE) 150, which is the device a human user interacts with other devices in the VPD system, for example, a smartphone or tablet. The human user in definition can be either the business owner or a consumer user. With user authentication, other devices in the VPD system will know if the UE 150 is running in a role of the business owner or a consumer user, and the configuration can set up for the various authorization plans of the user roles in the VPD system deployment, which can be integrated to existing Authentication, Authorization & Access (AAA) control with proper Role-Based Authorization (RBA) settings.

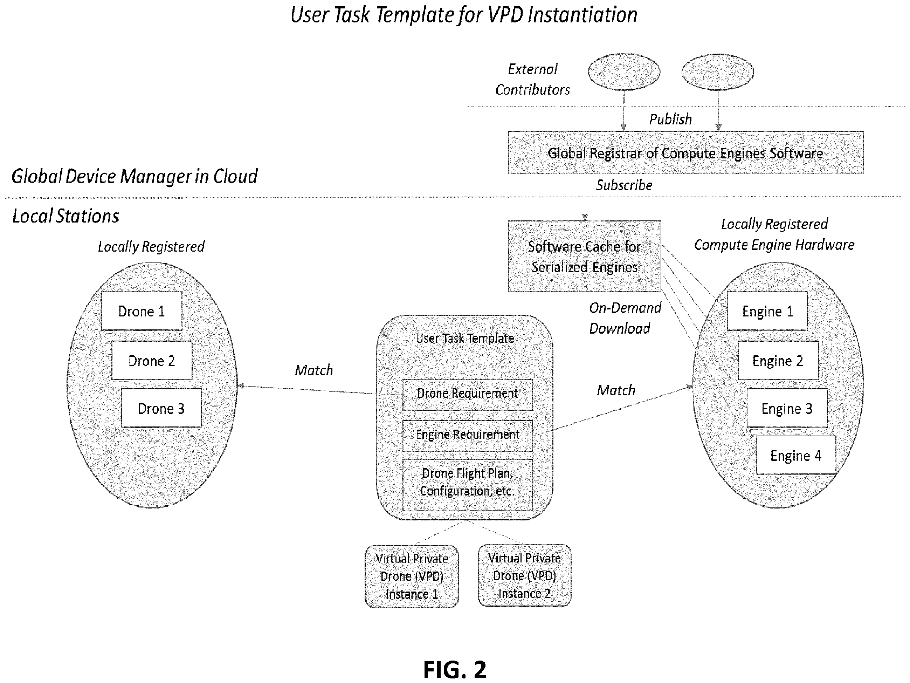

In one embodiment, if the UE 150 is the business owner role, the UE can create, edit or remove an available user task definition that is kept in the stations. The definition of an available user task is a template as shown in FIG. 2 that includes which type of drone device 130 to summon and which computing engine 140 to allocate with what software and parameters to load onto the computing engine 140 once the user task is started. If the UE is the consumer user role, the UE may retrieve the templates of all available user tasks it may be authorized to start in its local registration, and the information can be updated if needed. The UE can then start a new user task for this consumer user by sending the request to one station 120. If the station 120 finds the UE is authorized and there are enough resources (drone 130 and computing engine 140) to allocate for the user task, it accepts the request and starts the virtual private drone on behalf of the UE 150. The station 120 will choose an available drone 130 to summon, and initialize the computing engine 140 the drone will use for the AI algorithms needed for the user task in configuration. In another embodiment, the UE is allowed to choose specific AI algorithms for the user task if authorized and compliant with the regulations and local policies of this VPD system deployment.

It is noted that the example above is the station triggered by a software state machine, in which the UE sent the request to start the user task. In another embodiment, the VPD state machine is allowed to migrate from one station to another station, or duplicate with multiple copies in state synchronization for fault tolerance or station maintenance schedule.

The VPD system in the present invention may further include a middlebox device 160 that is a station proxy that extends the coverage of the VPD system to wider physical areas, through one or more extra segments of local area networks, possibly in different protocols from the stations that are capable of using for the local communication with other devices. The use of middlebox 160 is optional for any VPD system deployment. It can be useful when the business owner deploys all the station devices indoors in a physically secured room, for various reasons such as better security, easy management, low maintenance, etc., and deploys some middlebox devices in rugged form factors at those outdoor locations where the consumer users visit physically to request for the VPD services.

For example, the stations 120 can be installed indoors with secure WiFi access and the middleboxes 160 can connect via secure WiFi access points to the stations 120. In the meantime, those middleboxes 160 can also advertise the VPD service on Bluetooth networks outdoors at the sites where the consumer users could visit and request for the VPD service. The consumer UE can then simply use Bluetooth connection to interface with other VPD devices via some middlebox 160 nearby as it discovers. There is no need for the consumer UE to join the secure WiFi network of the business owner. This setup can result in a more practical and user-friendly deployment for commercial VPD service provisioning.

## Claims

1. A virtual private drone (VPD) system comprising a device manager (110), one or more stations (120), one or more drones (130), and one more computing engines (140),
wherein the drones (130) include a flight controller module which is programmable with a flight plan using a number of navigating points, and/or responding to runtime commands, including take off, land and move; and
wherein the computing engines (140) include hardware and software that perform specialized compute-intensive data processing such as computer vision and artificial intelligence (AI) using various algorithms
**characterised in that**
the device manager (130) is configured to keep a repository of device metadata of all drones (130) and computing engines (140) in each deployment of the drones (130), and runs as an always-on point of contact on the network, globally reachable by all other drones (130) and computing engines (140) in the system;
wherein the stations (120) are control centers of the VPD system, and each station (120) of the VPD system obtains its network address during registration with the device manager (110), and starts to synchronize copies of the device metadata using local communication.

2. The virtual private drone (VPD) system of claim 1, wherein the device manager (110) is implemented as a virtual machine running in a public cloud or in a private cloud, with a globally reachable address of Internet Protocol (IP) and well-known port.

3. The virtual private drone (VPD) system of claim 1, wherein the device metadata includes the availability counts for the drones (130) and computing engines (140) in the same VPD system.

4. The virtual private drone (VPD) system of claim 1, wherein system comprises a proxy embodied as ground control station (GCS) that has direct remote control to the drones (130).

5. The virtual private drone (VPD) system of claim 1, wherein the drones (130) are registered with the device manager (110) to obtain an address of at least one station (120) in the VPD system, and again register itself with all stations (120) for authentication with security credentials to create a secure communication channel between the drones (130) and all of the stations (120).

6. The virtual private drone (VPD) system of claim 1, wherein the computing engines (140) are configured to register with all known stations (120) after registering with the device manager (110).

7. The virtual private drone (VPD) system of claim 1, further including a user equipment (UE) for a human user to interact with the drones (130) and computing engines (140) in the VPD system.

8. The virtual private drone (VPD) system of claim 7, wherein if the UE is operated by a business owner, the UE is usable to create, edit or remove an available user task definition that is kept in the stations (120).

9. The virtual private drone (VPD) system of claim 8, wherein the available user task definition is a template that includes which type of drone (130) device to summon and which computing engine (140) to allocate with what software and parameters to load onto the computing engine (140) once the user task is started.

10. The virtual private drone (VPD) system of claim 7, wherein if the UE is a consumer user, the UE is usable to retrieve templates of all available user tasks and authorizable to start in its registration to the stations (120), wherein the information is updatable.

11. The virtual private drone (VPD) system of claim 1, further including a middlebox device (160) that is a station proxy extending the coverage of the VPD system to wider physical areas, through one or more extra segments of local area networks.

## Patentansprüche

1. Ein Virtuelles Privates Drohnensystem (VPD), das einen Geräte-Manager (110), eine oder mehrere Stationen (120), eine oder mehrere Drohnen (130) und eine oder mehrere Computer-Engines (140) umfasst,
wobei die Drohnen (130) ein Flugsteuerungsmodul enthalten, das mit einem Flugplan unter Verwendung einer Anzahl von Navigationspunkten programmierbar ist und / oder auf Laufzeitbefehle reagiert, einschließlich Start, Landung und Bewegung; und
wobei die Computer-Engines (140) Hardware und Software enthalten, die eine spezielle rechenintensive Datenverarbeitung wie Computer Vision und künstliche Intelligenz (KI) unter Verwendung verschiedener Algorithmen durchführen
**dadurch gekennzeichnet, dass**
Der Geräte-Manager (130) ist so konfiguriert, dass bei jeder Bereitstellung der Drohnen (130) ein Repository mit Geräte-Metadaten aller Drohnen (130) und Computer-Engines (140) gespeichert wird, und wird als ständiger Kontaktpunkt im Netzwerk ausgeführt, global erreichbar für alle anderen Drohnen (130) und Computer-Engines (140) im System;
wobei die Stationen (120) Kontrollzentren des VPD-Systems sind und jede Station (120) des VPD-Systems ihre Netzwerkadresse während der Registrierung beim Geräte-Manager (110) erhält und beginnt, Kopien der Geräte-Metadaten unter Verwendung lokaler Kommunikation zu synchronisieren.

2. Das Virtuelle Private Drohnensystem (VPD) nach Anspruch 1, wobei der Geräte-Manager (110) als virtuelle Maschine implementiert ist, die in einer öffentlichen Cloud oder in einer privaten Cloud mit einer global erreichbaren Adresse von Internet Protokoll (IP) und gut ausgeführt wird bekannter Hafen.

3. Das Virtuelle Private Drohnensystem (VPD) nach Anspruch 1, wobei die Geräte-Metadaten die Verfügbarkeitszählungen für die Drohnen (130) und Computer-Engines (140) in demselben VPD-System enthalten.

4. Das Virtuelle Private Drohnensystem (VPD) nach Anspruch 1, wobei das System einen als Bodenkontrollstation (GCS) verkörperten Proxy umfasst, der eine direkte Fernsteuerung zu den Drohnen (130) aufweist.

5. Das Virtuelle Private Drohnensystem (VPD) nach Anspruch 1, wobei die Drohnen (130) beim Geräte-Manager (110) registriert sind, um eine Adresse von mindestens einer Station (120) im VPD-System zu erhalten, und sich erneut selbst registrieren mit allen Stationen (120) zur Authentifizierung mit Sicherheitsanmeldeinformationen, um einen sicheren Kommunikationskanal zwischen den Drohnen (130) und allen Stationen (120) herzustellen.

6. Das Virtuelle Private Drohnensystem (VPD) nach Anspruch 1, wobei die Rechenmaschinen (140) konfiguriert sind, um sich nach der Registrierung beim Geräte-Manager (110) bei allen bekannten Stationen (120) zu registrieren.

7. Das Virtuelle Private Drohnensystem (VPD) nach Anspruch 1, ferner umfassend eine Benutzerausrüstung (UE), mit der ein menschlicher Benutzer mit den Drohnen (130) und Rechenmaschinen (140) in dem VPD-System interagieren kann.

8. Das Virtuelle Private Drohnensystem (VPD) nach Anspruch 7, wobei, wenn das UE von einem Geschäftsinhaber betrieben wird, das UE zum Erstellen, Bearbeiten oder Entfernen einer verfügbaren Benutzeraufgabendefinition verwendet werden kann, die in den Stationen (120) aufbewahrt wird.

9. Das Virtuelle Private Drohnensystem (VPD) nach Anspruch 8, wobei die verfügbare Benutzeraufgabendefinition eine Vorlage ist, die enthält, welcher Typ von Drohnengerät (130) beschworen werden soll und welche Rechenmaschine (140) welcher Software und welchen Parametern zugeordnet werden soll Laden Sie die Rechenmaschine (140), sobald die Benutzeraufgabe gestartet wurde.

10. Das Virtuelle Private Drohnensystem (VPD) nach Anspruch 7, wobei, wenn das UE ein Verbraucherbenutzer ist, das UE zum Abrufen von Vorlagen aller verfügbaren Benutzeraufgaben verwendet werden kann und zum Starten seiner Registrierung bei den Stationen (120) berechtigt ist, wobei die Informationen können aktualisiert werden.

11. Das Virtuelle Private Drohnensystem (VPD) nach Anspruch 1, ferner umfassend ein Middleboxgerät (160), das ein Stationsproxy ist, der die Abdeckung des VPD-Systems durch ein oder mehrere zusätzliche Segmente lokaler Netzwerke auf breitere physische Bereiche erweitert.

## Revendications

1. Un système de drone privé virtuel (VPD) comprenant un gestionnaire de périphériques (110), une ou plusieurs stations (120), un ou plusieurs drones (130) et un ou plusieurs moteurs informatiques (140),
Dans lequel les drones (130) comprennent un module de contrôleur de vol qui est programmable avec un plan de vol utilisant un certain nombre de points de navigation et / ou répondant à des commandes d'exécution, y compris le décollage, l'atterrissage et le déplacement ; et
dans lequel les moteurs informatiques (140) comprennent du matériel et des logiciels qui effectuent un traitement de données spécialisé intensif en calcul tel que la vision par ordinateur et l'intelligence artificielle (IA) en utilisant divers algorithmes
**caractérisé en ce que**
le gestionnaire de périphériques (130) est configuré pour conserver un référentiel de métadonnées de périphérique de tous les drones (130) et moteurs informatiques (140) dans chaque déploiement des drones (130), et fonctionne comme un point de contact permanent sur le réseau, globalement accessible par tous les autres drones (130) et moteurs de calcul (140) du système ;
dans lequel les stations (120) sont des centres de commande du système VPD et chaque station (120) du système VPD obtient son adresse de réseau pendant l'enregistrement auprès du gestionnaire de dispositif (110), et commence à synchroniser des copies des méta-données de dispositif en utilisant une communication locale.

2. Le système de drone privé virtuel (VPD) selon la revendication 1, dans lequel le gestionnaire de périphériques (110) est implémenté comme une machine virtuelle fonctionnant dans un cloud public ou dans un cloud privé, avec une adresse globalement accessible de protocole Internet (IP) et port bien connu.

3. Le système de drone privé virtuel (VPD) selon la revendication 1, dans lequel les méta-données du dispositif comprennent les décomptes de disponibilité pour les drones (130) et les moteurs informatiques (140) dans le même système VPD.

4. Le système de drone privé virtuel (VPD) selon la revendication 1, dans lequel le système comprend un proxy réalisé en tant que poste de contrôle au sol (GCS) qui a une télécommande directe vers les drones (130).

5. Le système de drone privé virtuel (VPD) selon la revendication 1, dans lequel les drones (130) sont enregistrés auprès du gestionnaire de périphériques (110) pour obtenir une adresse d'au moins une station (120) dans le système VPD et à nouveau s'enregistrer, avec toutes les stations (120) pour l'authentification avec des informations d'identification de sécurité pour créer un canal de communication sécurisé entre les drones (130) et toutes les stations (120).

6. Le système de drone privé virtuel (VPD) selon la revendication 1, dans lequel les moteurs informatiques (140) sont configurés pour s'enregistrer auprès de toutes les stations connues (120) après enregistrement auprès du gestionnaire de dispositifs (110).

7. Le système de drone privé virtuel (VPD) selon la revendication 1, comprenant en outre un équipement utilisateur (UE) pour qu'un utilisateur humain interagisse avec les drones (130) et les moteurs informatiques (140) dans le système VPD.

8. Le système de drone privé virtuel (VPD) selon la revendication 7, dans lequel si l'UE est exploité par un propriétaire d'entreprise, l'UE est utilisable pour créer, modifier ou supprimer une définition de tâche utilisateur disponible qui est conservée dans les stations (120).

9. Le système de drone privé virtuel (VPD) selon la revendication 8, dans lequel la définition de tâche utilisateur disponible est un modèle qui inclut le type de dispositif drone (130) à invoquer et le moteur de calcul (140) à allouer avec quels logiciels et paramètres charger sur le moteur de calcul (140) une fois que la tâche utilisateur est démarrée.

10. Le système de drone privé virtuel (VPD) selon la revendication 7, dans lequel si l'UE est un utilisateur consommateur, l'UE est utilisable pour récupérer des modèles de toutes les tâches utilisateurs disponibles et autorisables à démarrer dans son enregistrement aux stations (120), dans lequel les informations peuvent être mises à jour.

11. Le système de drone privé virtuel (VPD) selon la revendication 1, comprenant en outre un dispositif de boîtier de médiation (160) qui est un proxy de station étendant la couverture du système VPD à des zones physiques plus larges, à travers un ou plusieurs segments supplémentaires de réseaux locaux.
